**Europäisches Patentamt**

**European Patent Office**

**Office européen des brevets**

(19)

(11) Veröffentlichungsnummer: **0 329 137 B1**

(12)

# EUROPÄISCHE PATENTSCHRIFT

(45) Veröffentlichungstag der Patentschrift:
24.04.91 Patentblatt 91/17

(51) Int. Cl.⁵: **E05D 5/02, E05D 7/04**

(21) Anmeldenummer: 89102682.5

(22) Anmeldetag: 16.02.89

(54) **Tür oder Fenster mit verstellbarem Scharnier.**

(30) Priorität: 18.02.88 DE 3805095

(43) Veröffentlichungstag der Anmeldung:
23.08.89 Patentblatt 89/34

(45) Bekanntmachung des Hinweises auf die
Patenterteilung:
24.04.91 Patentblatt 91/17

(84) Benannte Vertragsstaaten:
BE DE ES FR NL

(56) Entgegenhaltungen:
DE-C- 2 421 587
DE-C- 2 436 844
FR-A- 2 324 839
GB-A- 962 312
GB-A- 1 287 446
GB-A- 1 579 941

(73) Patentinhaber: CASMA S.p.A.
Via Primo Maggio 86
I-20013 Magenta (IT)

(72) Erfinder: Marinoni, Mario
PZA Veneto, 12
I-20013 Magenta (IT)

(74) Vertreter: Fincke, Karl Theodor, Dr. Dipl.-Phys.
et al
Patentanwälte Dipl.-Ing. H.Weickmann
Dipl.-Phys.Dr. K.Fincke Dipl.-Ing.
F.A.Weickmann Dipl.-Chem. B. Huber Dr. Ing.
H. Liska Dipl.-Phys.Dr. J. Prechtel Postfach
860820
W-8000 München 86 (DE)

**Beschreibung**

Die Erfindung betrifft eine Tür oder ein Fenster nach dem Oberbegriff des Anspruchs 1.

Türen und Fenster dieser Art sind nach der DE-PS 2 421 587 und nach der DE-PS 2 436 844 bekannt.

Nach diesen beiden Patentschriften erfolgt eine Ankermitnahme dadurch, daß man das Gewinde der Schraube im Innengewinde des Ankers schwergängig macht. Eine solche Schwergängigkeit ist aber nicht anhaltend.

Aufgabe der Erfindung ist es, eine direkte Montage der Tür bzw. des Fensters zu gestatten, ohne das am Rahmenschenkel zu befestigende Scharnierteil von der Tür bzw. dem Fenster trennen zu müssen, um größte Montagefreundlichkeit zu erreichen. Insbesondere soll eine Befestigung eines Scharnierteils an einem Rahmenschenkel möglich sein, die sich von allein an unterschiedliche Profile des Rahmenschenkels anpaßt und die eine Einführung des Befestigungsglieds bzw. der Befestigungsglieder nach Einführung des Befestigungsglieds bzw. der Befestigungsglieder durch die Frontseite des vertikalen Schlitzes im Profil gestattet.

Die Lösung dieser Aufgabe ist in Anspruch 1 angegeben. Zum Einführen wird der Anker (bzw. werden die Anker) so gestellt, daß er durch den vertikalen Schlitz zu stecken ist. Beim Anziehen der Schraube (bzw. der Schrauben) verdreht sich der Anker (bzw. verdrehen sich die Anker) und hintergreift (bzw. hintergreifen) beidseitig durch Reibschlußmitnahme den Schlitz, worauf er (bzw. sie) durch weiteres Anziehen der Schraube (bzw. der Schrauben) im Aufnahmeraum festzusetzen ist (bzw. sind). Auch eine Höhenverstellung ist auf diese Art und Weise ohne Schwierigkeit möglich.

Will man je nach Montagegewohnheit das an dem Rahmenschenkel zu befestigende Scharnierteil von dem an der Tür befestigten Scharnierteil doch trennen, so kann das auf sehr einfache Weise geschehen, indem das am Rahmenschenkel zu befestigende Scharnierteil direkt und ohne Fräsarbeiten in das Rahmenschenkelprofil stirnseitig eingeführt wird.

Eine besonders einfache Reibschlußmitnahme erfolgt durch die Ausbildung nach Anspruch 2, ganz besonders sicher in der Ausbildung nach Anspruch 3.

Eine Gestaltung des Ankers nach Anspruch 2 hat sich als besonders zweckmäßig erwiesen.

Ein Hintergreifen des Schlitzes mit dem Anker wird besonders durch die Ausbildung nach Anspruch 3 sichergestellt.

Die Erfindung wird im folgenden an Ausführungsbeispielen unter Hinweis auf die beigefügten Zeichnungen beschrieben.

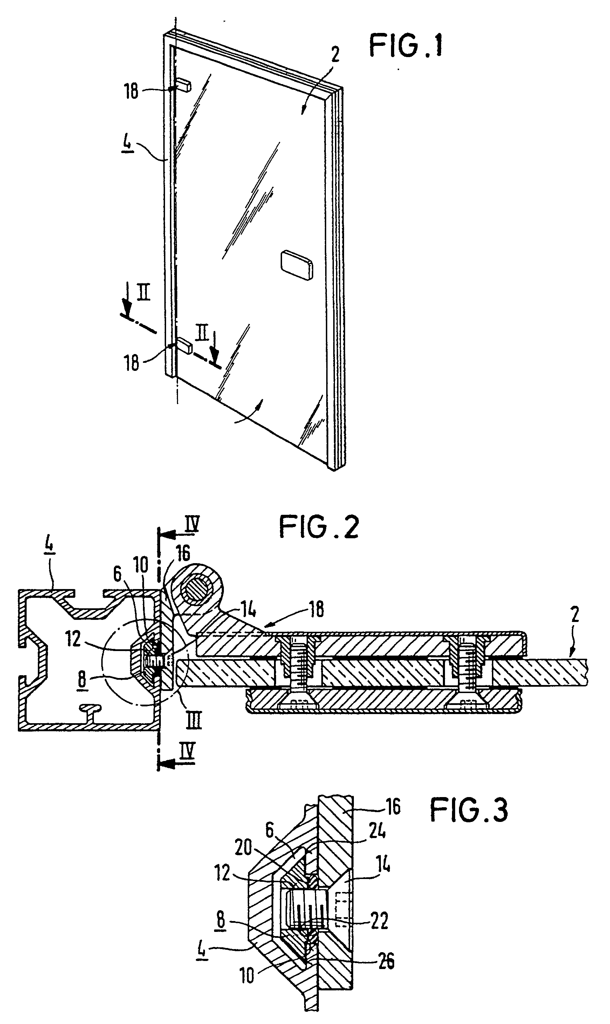

Fig. 1 zeigt eine Ganzglastür in einem Rahmen.
Fig. 2 zeigt einen Schnitt längs der Linie II-II in Fig. 1.
Fig. 3 zeigt vergrößert den Bereich III in Fig. 2.

Fig. 4 zeigt einen Schnitt längs der Linie IV-IV in Fig. 2.
Fig. 5 zeigt einen Fig. 4 entsprechenden Schnitt bei festgesetzten Ankern.

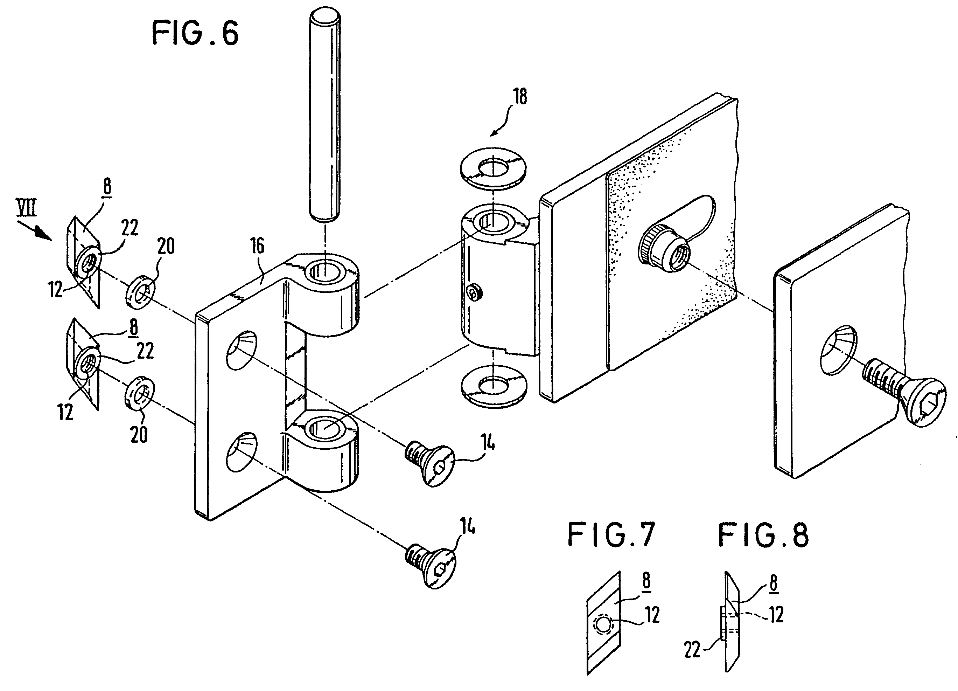

Fig. 6 zeigt eine Explosionsdarstellung.
Fig. 7 zeigt einen Anker in Fig. 6 aus Blickrichtung VII.
Fig. 8 zeigt eine Seitenansicht des Ankers nach Fig. 7.
Fig. 9 zeigt die Befestigung eines Scharnierteils in einem Profil, das von dem aus Fig. 2 ersichtlichen Profil wesentlich verschieden ist.

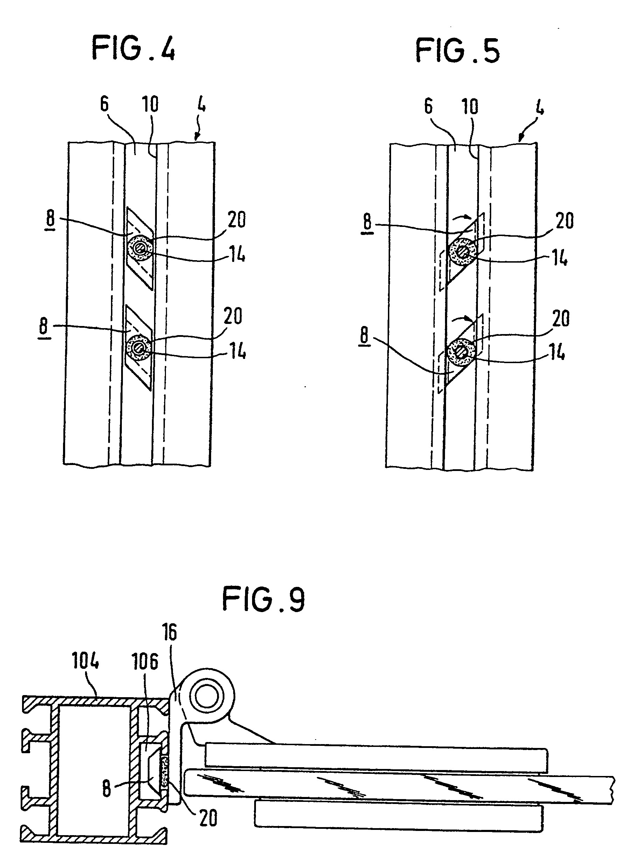

Die Tür 2 nach dem Ausführungsbeispiel weist einen vertikalen Rahmenschenkel 4 auf. Dieser Rahmenschenkel 4 ist ein Hohlprofil und hat einen vertikal langgestreckten Aufnahme raum 6 für Anker 8. Der Aufnahmeraum 6 ist durch einen vertikalen Schlitz 10 zugänglich. Die Anker 8 haben die Form von Rhomben mit einer Querabmessung, die durch den Schlitz 10 faßt, wie dies aus Fig. 4 ersichtlich ist. In jedem Anker 8 befindet sich ein Innengewinde 12 zur Aufnahme einer Schraube 14, mittels der ein Scharnierteil 16 eines Türscharniers 18 zu befestigen ist. Auf der Schraube 14 steckt ein O-Ring 20, der in den Schlitz 10 paßt. Der Anker 8 hat auf der Seite des Schlitzes 10 einen sein Innengewinde 12 umschließenden Ringkragen 22 mit einem Außendurchmesser, der etwas kleiner ist als die Weite des Schlitzes 10, also ebenfalls in den Schlitz 10 paßt. Die Summe aus der Höhe des Ringkragens 22 und der Dicke des O-Rings 20 ist etwas größer als die Tiefe des Schlitzes 10. Beim Anziehen der Schraube 14 wird durch das Wechselspiel zwischen O-Ring 20 und Ringkragen 22 der Anker 8 in den in Fig. 5 dargestellten Zustand verdreht, so daß er den Schlitz 10 auf der Innenseite des Aufnahmeraums 6 beidseitig hintergreift (Flächen 24 und 26). Beim weiteren Anziehen der Schraube 14 wird der Anker 8 fest an die Flächen 24, 26 gezogen, wodurch das Scharnierteil 16 befestigt wird. In einer bevorzugten – nicht dargestellten – Ausführungsform kann der Anker 8 Auflaufschrägen haben, die sein Auflaufen auf die Flächen 24, 26 beim Verdrehen in den in Fig. 5 dargestellten Zustand erleichtern.

Fig. 9 zeigt ein Rahmenprofil 104 mit einem anders gestalteten Aufnahmeraum 106. Ersichtlich kann der gleiche Anker 8 zur Befestigung des Scharnierteils 16 an dem Rahmenprofil 104 verwendet werden.

**Ansprüche**

1. Tür (2) oder Fenster, insbesondere Ganzglastür oder -fenster, mit einem vertikalen Rahmenschenkel (4 ; 104), in dem sich ein durch einen vertikalen Schlitz (10) zugänglicher, vertikal langgestreckter Aufnahmeraum (6 ; 106) für einen Anker (8) mit einem Innengewinde (12) befindet, in das eine ein Scharnierteil (16) durchsetzende Schraube (14) einzuschrauben ist, wobei der Anker (8) eine Querabmessung hat, die kleiner ist als die Weite des Schlitzes (10), und eine Längsabmessung, die größer ist als die Weite des Schlitzes (10), wobei ein von der Schraube (14) durchsetzter Reibschlußmitnehmer (20, 22) für den Anker (8) vorgesehen ist und wobei der Anker (8) auf der Seite des Schlitzes (10) einen sein Innengewinde umschließenden Ringkragen (22) mit einem Außendurchmesser aufweist, der etwas kleiner ist als die Weite des Schlitzes (10), **dadurch gekennzeichnet,** daß der Reibschlußmitnehmer (20, 22) einen in den Schlitz (10) passenden elastomeren O-Ring (20) aufweist und daß die Summe aus der Höhe des Ringkragens (22) und der Dicke des O-Rings (20) etwas größer ist als die Tiefe des Schlitzes (10).

2. Tür oder Fenster nach Anspruch 1, dadurch gekennzeichnet, daß der Anker (8) in einem sein Innengewinde (12) recht-winklig schneidenden Querschnitt rautenförmig ist.

3. Tür oder Fenster nach einem der vorstehenden Ansprüche dadurch gekennzeichnet, daß der Anker (8) den an den Schlitz (10) angrenzenden Innenflächen (24, 26) des Aufnahmeraums (6 ; 106) zugeordnete Auflaufschrägen aufweist.

## Claims

1. Door (2) or window, more particularly a fully glazed door or window, having a vertical frame member (4 ; 104), in which there is a vertically elongate accommodating space (6 ; 106), accessible through a vertical slot (10), for receiving an anchor (8) with an internal thread (12), into which a bolt (14) passing through a hinge part (16) can be screwed, the anchor (8) having a transverse dimension which is less thant the width of the slot (10) and a longitudinal dimension which is greater than the width of the slot (10), a frictional drive (20, 22) being provided for the anchor (8), the bolt (14) passing through said drive (20, 22), whilst at the side nearest the slot (10) the anchor (8) has an annular collar (22) surrounding the internal thread thereof and having an external diameter which is somewhat less than the width of the slot (10), characterised in that the frictional drive (20, 22) includes an elastomeric O-ring (20) which fits into the slot (10) and the sum of the height of the annual collar (22) and the thickness of the O-ring (20) is somewhat greater than the depth of the slot (10).

2. Door or window according to Claim 1, characterised in that the anchor (8) is rhomboid in its cross section which intersects at right angles with its internal thread (12).

3. Door or window according to one of the preceding claims, characterised in that the anchor (8) has approach bevels associated with the inner surfaces (24, 26) of the accomodating space (6 ; 106) adjacent to the slot (10).

## Revendications

1. Porte (2) ou fenêtre, notamment porte ou fenêtre à vitrage intégral, présentant un montant de bâti vertical (4 ; 104) dans lequel est ménagé un logement (6 ; 106) s'étendant en longueur dans le sens vertical, accessible à travers une fente verticale (10) et destiné à une pièce d'ancrage (8) munie d'un filetage interne (12) dans lequel doit être vissée une vis (14) traversant une pièce de charnière (16), la pièce d'ancrage (8) étant d'une dimension transversale plus petite que la largeur de la fente (10), et d'une dimension longitudinale plus grande que la largeur de la fente (10), un organe (20, 22) d'entrainement par frottement, traversé par la vis (14), étant prévu pour la pièce d'ancrage (8) et ladite pièce d'ancrage (8) comportant, du côté de la fente (10), une collerette annulaire (22) qui entoure son filetage interne et possède un diamètre externe sensiblement plus petit que la largeur de la fente (10),
caractérisée par le fait
que l'organe (20, 22) d'entrainement par frottement présente un joint torique (20) en élastomère, s'adaptant dans la fente (10) ; et par le fait que la somme de la hauteur de la collerette annulaire (22) et de l'épaisseur du joint torique (20) est sensiblement plus grande que la profondeur de la fente (10).

2. Porte ou fenêtre selon la revendication 1, caractérisée par le fait que la pièce d'ancrage (8) revêt la forme d'un losange en coupe transversale coupant son filetage interne (12) à angle droit.

3. Porte ou fenêtre selon l'une des revendications précédentes, caractérisée par le fait que la pièce d'ancrage (8) présente des rampes biseautées, associées aux surfaces internes (24, 26) du logement (6 ; 106) qui sont limitrophes de la fente (10).

FIG.1

FIG.2

FIG.3

## FIG.4

## FIG.5

## FIG.9

FIG.6

VII

8
22
12
20

8
22
12
20

16

14

14

18

FIG.7    FIG.8

8
12

8
12

22

EP 0 329 137 B1